# EUROPEAN PATENT SPECIFICATION

(11) **EP 3 260 684 B1**
(45) Date of publication and mention of the grant of the patent: **21.04.2021**
(21) Application number: 17176943.3
(22) Date of filing: 20.06.2017
(51) Int. Cl.: F02C 6/08, F01D 15/08, F04D 25/02, F04D 27/02, F02C 7/32

(54) **GAS TURBINE ENGINE COMPRISING A GEARBOX BETWEEN A BLEED AIR SYSTEM TURBINE AND COMPRESSOR**
GASTURBINENMOTOR UMFASSEND EIN GETRIEBE ZWISCHEN EINER TURBINE UND EINEM VERDICHTER EINES ZAPFLUFTSYSTEMS
MOTEUR À TURBINE À GAZ COMPRENANT UNE BOÎTE DE VITESSES ENTRE UNE TURBINE ET UN COMPRESSEUR D'UN SYSTÈME DE PRÉLÈVEMENT D'AIR

(30) Priority: 20.06.2016 US 201615186729
(43) Date of publication of application: 27.12.2017
(73) Proprietor: Raytheon Technologies Corporation, Farmington, CT 06032 (US)
(72) Inventor: TAYLOR, Stephen H., East Hartford, CT Connecticut 06118 (US); LENTS, Charles E., Amston, CT Connecticut 06231 (US); SUCIU, Gabriel L., Glastonbury, CT Connecticut 06033 (US); MERRY, Brian D., Andover, CT Connecticut 06232 (US); CHANDLER, Jesse M., South Windsor, CT Connecticut 06074 (US)
(74) Representative: Dehns

(56) References cited:
- EP-A1- 3 023 625
- US-A- 3 145 532
- US-A1- 2001 025 507
- US-A1- 2012 248 242
- US-A1- 2013 333 365
- US-A1- 2014 223 901
- US-A1- 2015 176 501
- US-A1- 2015 275 758
- US-A1- 2015 275 769

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section.

Pneumatic systems of the aircraft utilize engine bleed air for pneumatic power. The engine bleed air is obtained from locations within the compressor section to provide air at pressures required by the pneumatic system. Pressures within the compressor section vary during engine operation. At lower engine power settings pressures within the compressor section may closely match demand, however at higher engine power settings, pressures at the same compressor location may greatly exceed demand. For this reason, engine bleed air is obtained from different locations within the compressor section depending on the current engine operating conditions in an effort to maintain engine efficiency. Even using bleed air from different locations, the variation of pressures can create difficulties in matching the demand of the pneumatic system. The difference between demand of the pneumatic system and engine bleed air pressures can reduce engine operating efficiency.

US 2015/275769 A1 discloses a prior art gas turbine engine according to the preamble of claim 1 and a prior art method according to the preamble of claim 4.

### SUMMARY

According to an aspect of the present invention, there is a gas turbine engine as set forth in claim 1.

An embodiment includes a control valve controlling airflow through the turbine for controlling a speed of the turbine.

Another embodiment according to any of the previous embodiments includes a controller receiving information indicative of the demand of the pneumatic system and controlling operation of at least one control device to adjust airflow communicated to the pneumatic system.

According to an aspect of the present invention, there is a method according to claim 4.

An embodiment includes exhausting a portion of airflow with an exhaust valve such that airflow in excess of the demand of the pneumatic system is exhausted through an exhaust passage.

Although the different examples have the specific components shown in the illustrations, embodiments of this disclosure are not limited to those particular combinations. It is possible to use some of the components or features from one of the examples in combination with features or components from another one of the examples However, the scope of the present invention is solely defined by the appended claims.

These and other features disclosed herein can be best understood from the following specification and drawings, the following of which is a brief description.

### BRIEF DESCRIPTION OF THE DRAWINGS

Figure 1 schematically shows an example gas turbine engine embodiment.
Figure 2 schematically shows an example engine bleed air system embodiment.
Figure 3 schematically shows an example engine bleed air system outside of the scope of the present invention.
Figure 4 schematically illustrates another example engine bleed air system outside of the scope of the present invention.

### DETAILED DESCRIPTION

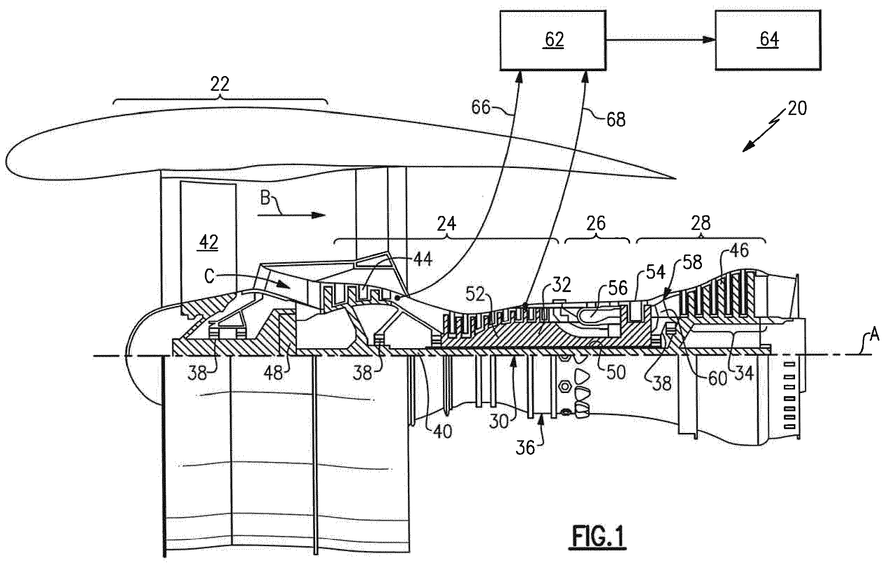

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high-energy exhaust gas stream that expands through the turbine section 28 where energy is extracted and utilized to drive the fan section 22 and the compressor section 24.

Although the disclosed non-limiting embodiment depicts a two-spool turbofan gas turbine engine, it should be understood that the concepts described herein are not limited to use with two-spool turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

Airflow through the core airflow path C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six, with an example embodiment being greater than about ten. The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft. (10,668 m), with the engine at its best fuel consumption - also known as "bucket cruise Thrust Specific Fuel Consumption ('TSFC')" - is the industry standard parameter of pound-mass (lbm) of fuel per hour being burned divided by pound-force (Ibf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R)/ (518.7°R)]^{0.5} (where °R = K x 9/5). The "Low corrected fan tip speed", as disclosed herein according to one non-limiting embodiment, is less than about 1150 ft/second (350.5 m/s). The example fan pressure ratio and fan tip speed are measured at engine operating conditions corresponding with aircraft take-off.

The example gas turbine engine includes the fan 42 that comprises in one non-limiting embodiment less than about twenty-six fan blades. In another non-limiting embodiment, the fan section 22 includes less than about twenty fan blades. Moreover, in one disclosed embodiment the low pressure turbine 46 includes no more than about six turbine rotors schematically indicated at 34. In another non-limiting example embodiment the low pressure turbine 46 includes about three turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

Gas turbine engines designs are seeking to increase overall efficiency by generating higher overall pressure ratios. By achieving higher overall pressure ratios, increased levels of performance and efficiency may be achieved. However, challenges are raised in that the parts and components associated with a high pressure turbine require additional cooling air as the overall pressure ratio increases.

The example engine 20 includes an engine bleed air system 62 that supplies engine bleed air to pneumatic systems schematically illustrated at 64. The pneumatic system 64 can include an environmental control system as well as other aircraft systems that require airflow. The pneumatic system 64 utilizes air within a defined range of pressures and temperatures to operate accessory systems and cooling systems of the engine and aboard the aircraft. The airflow required to operate the pneumatic system 64 is drawn from the engine 20. Specifically, airflow for the pneumatic system 64 is drawn from the compressor section 24 of the main engine 20.

Instead of attempting to match pneumatic system demand with airflow and pressures at a specific location within the compressor section 24, the example engine bleed air system 62 increases pressures from lower pressure locations in the engine 20 to pressures required for operation of the pneumatic system 64. During engine operation, airflow is supplied to the engine bleed air system 62 and then passed to the pneumatic system 64.

Airflow from the main compressor section 24 varies in pressure and temperature depending on the current engine operating condition. In some instances, bleed air may be drawn from the compressor section 24 and be suitable for use in the pneumatic system without conditioning. In other circumstances, the airflow provided by the main compressor section 24 is well above the pressures and temperatures required by the pneumatic system. Accordingly, the example bleed air system 62 draws airflow from a position in the main compressor section 24 determined to always be below the pressures required by the pneumatic system 64. The engine bleed air system 62 increases the pressures of the airflow to that required by the pneumatic system 64.

Airflow supplied from the main compressor section 24 will vary depending on current engine operation. Accordingly, the varying input airflow and pressures can result in airflow and pressures beyond what is required by the pneumatic system 64. The variation in incoming airflow and pressure is accommodated by the disclosed engine bleed air system 62 to provide airflows and pressures within acceptable ranges while enabling operation within a stable operating range.

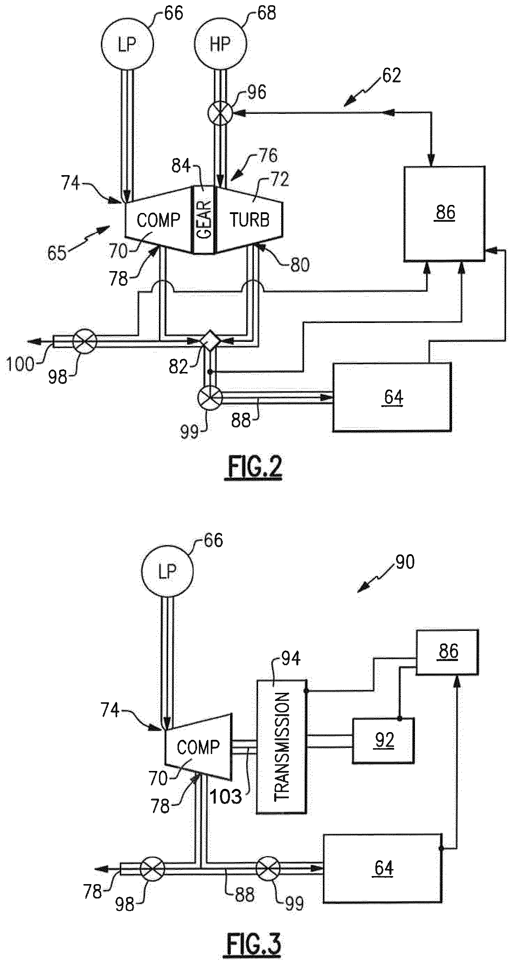

Referring to Figure 2 with continued reference to Figure 1, the example engine bleed air system 62 includes a turbo-compressor 65. The flow-multiplier turbo-compressor 65 includes a booster compressor 70 driven by a turbine 72 through a gear system 84. The gear system 84 provides a speed change between the turbine 72 and the compressor 70 such that both the turbine 72 and compressor 70 may operate at closer to optimum speeds. The example compressor 70 receives airflow from a low pressure source 66 at an inlet 74. The compressor 70 increases the pressure and outputs airflow at an outlet 78 and communicates the airflow to the pneumatic system 64.

In this disclosed example the turbine 72 includes an inlet 76 that receives airflow from a high pressure source 68. Airflow from the high pressure source 68 is expanded through the turbine 72 and is exhausted at turbine outlet 80. A speed of the turbine 72 may be controlled by a control valve 96 that operates responsive to commands from a controller 86. The controller 86 utilizes information indicative of a demand of the pneumatic system 64, airflow within an outlet passage 88 and pressures output from the booster compressor 70. While the control valve 96 is illustrated upstream of the turbine 72, the control valve 96 may instead be located downstream of the turbine and provide equivalent functionality.

The turbine section 72 operates optimally at a speed different than that of the compressor 70. In one example, the turbine 72 operates more efficiently at speeds greater than the compressor 70. The gear 84 provides a speed change between the turbine 72 and the compressor 70 that enables both the booster compressor 70 and turbine 72 to operate at closer to optimal speeds. The gear system 84 includes a speed reduction gearing required to enable operation of the turbine 72 and compressor 70 at different speeds. In one example, the gear system 84 provides a speed reduction such that the turbine 70 rotates at speed greater than that of the compressor 70.

The example engine bleed air system 62 further includes an exhaust valve 98 that controls airflow through an exhaust passage 100. The turbine 72 and booster compressor 70 may operate at optimal speeds that provide air flow rate above the demand of the pneumatic system 64. During some engine operating conditions, airflow required to maintain efficient and/or feasible operation of the compressor is in excess of the demand of the pneumatic system 64. In these instances, the booster compressor 70 is operated at speeds that provide excess airflow above that demanded by the pneumatic system 64. The excess airflow is exhausted through the exhaust passage 100. A control valve 99 may be provided to further control airflow to the pneumatic system 64 at an airflow and pressure that correspond with the demand regardless of the input pressures from the low pressure source 66 and output pressures provided by the compressor 70.

Referring to Figure 3 with continued reference to Figure 1, an arrangement of an engine bleed air system outside of the scope of the present invention is schematically illustrated and indicated at 90 and includes a transmission 94 driven by an electric motor 92. The electric motor 92 is controlled by the controller 86 to drive a transmission 94 that in turn drives the booster compressor 70 at speeds that provide airflow and pressures corresponding with the demand of the pneumatic system 64. In the example, transmission comprises a variable speed transmission 94 capable of providing at least two different speed change ratios between the electric motor 92 and the compressor 70.

The transmission 94 enables operation of the compressor 70 at speeds that provide efficient operation. Efficient operation of the compressor 70 increases pressure from the low pressure source 66 to a level demanded by the pneumatic system 64.

The example electric motor 92 drives the transmission 94 which in turn drives the compressor 70 through a shaft 103. The electric motor 92 can be driven in a variable manner such that the speeds provided through the variable transmission 94 can more closely match those conditions that provide stable operating conditions for the booster compressor 70.

Although the variable speed transmission 94 and electric motor 92 provide a variation in speeds available for operation of the flow-multiplier 70, in some instances, the input airflow and pressures from the low pressure source 66 are such that the compressor 70 would have to operate within an unstable region to match the demand airflow and pressures required by the pneumatic system 64. Accordingly, the exhaust valve 98 is provided and enables the compressor 70 to run at speeds that provide airflows in excess of those demanded by the pneumatic system 64. The excess airflow is exhausted overboard by metering airflow through the exhaust valve 98. The control valve 99 controls airflow to the pneumatic system 64.

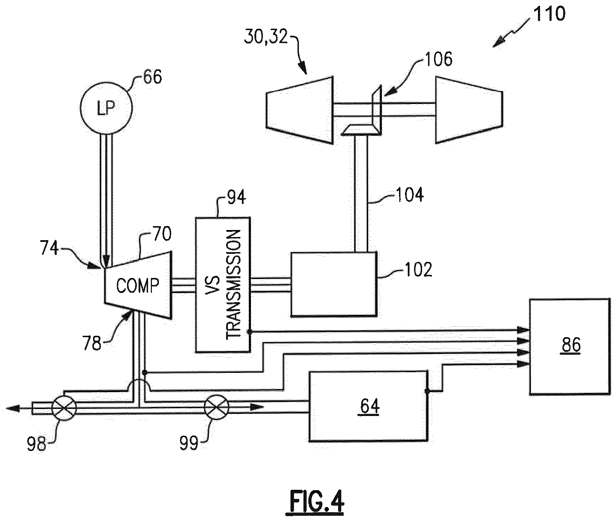

Referring to Figure 4 with continued reference to Figure 1, an arrangement of an engine bleed air system outside of the scope of the present invention is schematically indicated at 110 and includes an accessory gearbox 102 that is coupled to drive the variable speed transmission 94. The example accessory gearbox 102 driven through a shaft 104 that is coupled through a coupling 106 to one of the low spool and high spools 30, 32 of the gas turbine engine 20. The example gas turbine engine 20 includes the accessory gearbox 102 that in this example drives the variable speed transmission 94 that is in turn coupled to drive the booster compressor 70. The example accessory gearbox 102 may drive other devices in addition to the transmission 94.

Each of the low speed spool 30 and the high speed spool 32 operate at different speeds depending on specific engine operating conditions and therefore through the mechanical coupling provided by the shaft 104, the accessory gearbox 102 will drive the transmission 94 at different speeds dependent on current engine operating conditions. The variable transmission 94 can change speeds such that the compressor 70 can run at speeds different than the output provided by the accessory gearbox 102. Accordingly, the variable transmission 94 accounts for changes in engine speeds such that the compressor 70 can more closely match optimal operating speeds and conditions to provide the desired output airflow and pressure to the pneumatic system 64.

In this example, the controller 86 is in communication with the pneumatic systems 64 as well as in communication with various sensors that provide information indicative of current operating conditions. The controller 86 then can control operation of the variable transmission 94 to more closely match the speed of the booster compressor 70 with those speeds required to provide the desired output airflow and pressure demanded by the pneumatic systems 64.

Although the booster compressor 70 can be driven at speeds closer to optimal conditions to provide a desired airflow and pressure, there are instances where efficient or stable operation of the compressor requires airflows and pressures that exceed the demands by the pneumatic system 64. As discussed above, operation of the compressor 70 below stable operating conditions reduces overall efficiency and adversely effects operation. Accordingly, the example engine bleed air system 110 includes the exhaust valve 98 that enables the booster compressor 70 to operate at speeds that provide airflows that exceed those demanded by the pneumatic system 64. The excess airflow is exhausted overboard through the exhaust passage 100 as governed by the exhaust valve 98. The control valve 99 governs airflow to the pneumatic system 64.

Accordingly, the example disclosed engine bleed air system embodiments provide speed change systems to enable the booster compressor to run at closer to optimal speeds and provide airflows and pressures that more closely match those demanded by the pneumatic systems.

Although example embodiments have been disclosed, a worker of ordinary skill in this art would recognize that certain modifications would come within the scope of the present invention. For that reason, the following claims should be studied to determine the scope and content of the present invention.

## Claims

1. A gas turbine engine (20) comprising;
a main engine compressor section (24);
a main engine turbine section (28);
a booster compressor (70) for changing a pressure of airflow received from the main engine compressor section (24) to a pressure desired for a pneumatic system (64),
a bleed air system turbine (72) configured to be driven by airflow from the main engine compressor section (24);
a speed change system (84, 94) for driving the booster compressor (70); and an exhaust valve (98) for exhausting airflow in excess of an airflow demanded by the pneumatic system (64),
**characterised in that**:
the speed change system comprises a gearbox (84) coupled between the bleed air system turbine (72) and the booster compressor (70) such that the bleed air system turbine (72) and the booster compressor (70) rotate at different speeds.

2. The gas turbine engine (20) as recited in claim 1, including a control valve (96) controlling airflow through the bleed air system turbine (72) for controlling a speed of the bleed air system turbine (72).

3. The gas turbine engine (20) as recited in any preceding claim, including a controller (86) receiving information indicative of the demand of the pneumatic system (64) and controlling operation of at least one control device (99) to adjust airflow communicated to the pneumatic system (64).

4. A method of controlling engine bleed airflow of a gas turbine engine with a main engine compressor section (24) and a main engine turbine section (28), the method comprising:
configuring a booster compressor (70) to receive engine bleed air from the main engine compressor section (24) of the gas turbine engine (20);
compressing the engine bleed air from the main engine compressor section (24) with the booster compressor (70) and supplying the compressed engine bleed to a pneumatic system (64) according to a demand of the pneumatic system (64), wherein the gas turbine engine (20) comprises a bleed air system turbine (72) driven by airflow from the main engine compressor section (24),
driving the booster compressor (70) with a speed change system (84, 94); and
exhausting airflow in excess of the demand through an exhaust valve (98),
**characterised in that**:
the speed change system comprises a gearbox (84) coupled between the bleed air system turbine (72) and the booster compressor (70) such that the bleed air system turbine (72) and the booster compressor (70) rotate at different speeds.

5. The method as recited in claim 4, including exhausting a portion of airflow with the exhaust valve (98) through an exhaust passage (100).

## Patentansprüche

1. Gasturbinentriebwerk (20), umfassend;
einen Haupttriebwerkverdichterabschnitt (24);
einen Haupttriebwerkturbinenabschnitt (28);
einen Booster-Verdichter (70) zum Ändern eines Drucks eines Luftstroms, der vom Haupttriebwerkverdichterabschnitt (24) empfangen wird, auf einen Druck, der für ein pneumatisches System (64) gewünscht ist;
eine Zapfluftsystemturbine (72), die so konfiguriert ist, dass sie durch einen Luftstrom vom Haupttriebwerkverdichterabschnitt (24) angetrieben wird;
ein Drehzahländerungssystem (84, 94) zum Antreiben des Booster-Verdichters (70); und
ein Auslassventil (98) zum Ablassen eines Luftstroms, der einen vom pneumatischen System (64) geforderten Luftstrom übersteigt,
**dadurch gekennzeichnet, dass**:
das Drehzahländerungssystem ein Getriebe (84) umfasst, das zwischen der Zapfluftsystemturbine (72) und dem Booster-Verdichter (70) derart gekoppelt ist, dass sich die Zapfluftsystemturbine (72) und der Booster-Verdichter (70) mit unterschiedlichen Drehzahlen drehen.

2. Gasturbinentriebwerk (20) nach Anspruch 1, das ein Steuerventil (96) beinhaltet, dass einen Luftstrom durch die Zapfluftsystemturbine (72) steuert, um eine Drehzahl der Zapfluftsystemturbine (72) zu steuern.

3. Gasturbinentriebwerk (20) nach einem der vorstehenden Ansprüche, das eine Steuerung (86) beinhaltet, die Informationen empfängt, welche den Bedarf des pneumatischen Systems (64) angeben, und den Betrieb mindestens einer Steuervorrichtung (99) zum Anpassen des Luftstroms, der an das pneumatische System (64) übermittelt wird, steuert.

4. Verfahren zum Steuern eines Triebwerkzapfluftstroms eines Gasturbinentriebwerks mit einem Haupttriebwerkverdichterabschnitt (24) und einem Haupttriebwerkturbinenabschnitt (28), wobei das Verfahren Folgendes umfasst:
Konfigurieren eines Booster-Verdichters (70) zum Aufnehmen von Triebwerkzapfluft vom Haupttriebwerkverdichterabschnitt (24) des Gasturbinentriebwerks (20);
Verdichten der Triebwerkzapfluft vom Haupttriebwerkverdichterabschnitt (24) mit dem Booster-Verdichter (70) und Zuführen der verdichteten Triebwerkzapfluft zu einem pneumatischen System (64) gemäß einem Bedarf des pneumatischen Systems (64), wobei das Gasturbinentriebwerk (20) eine Zapfluftsystemturbine (72) umfasst, die durch einen Luftstrom vom Haupttriebwerkverdichterabschnitt (24) angetrieben wird,
Antreiben des Booster-Verdichters (70) mit einem Drehzahländerungssystem (84, 94); und
Auslassen eines Luftstroms, der den Bedarf übersteigt, durch ein Auslassventil (98),
**dadurch gekennzeichnet, dass**:
das Drehzahländerungssystem ein Getriebe (84) umfasst, das zwischen der Zapfluftsystemturbine (72) und dem Booster-Verdichter (70) derart gekoppelt ist, dass sich die Zapfluftsystemturbine (72) und der Booster-Verdichter (70) mit unterschiedlichen Drehzahlen drehen.

5. Verfahren nach Anspruch 4, das Auslassen eines Teils des Luftstroms mit dem Auslassventil (98) durch einen Auslasskanal (100) beinhaltet.

## Revendications

1. Moteur à turbine à gaz (20), comprenant :
une section de compresseur de moteur principal (24) ;
une section de turbine de moteur principal (28) ;
un surpresseur (70) destiné à modifier une pression d'écoulement d'air reçu en provenance de la section de compresseur de moteur principal (24) en une pression souhaitée pour un système pneumatique (64),
une turbine d'un système de prélèvement d'air (72) conçue pour être entraînée par un écoulement d'air provenant de la section de compresseur de moteur principal (24) ;
un système de changement de vitesse (84, 94) destiné à entraîner le supresseur (70) ; et
une soupape d'échappement (98) destinée à évacuer un écoulement d'air en excès d'un écoulement d'air demandé par le système pneumatique (64),
**caractérisé en ce que** :
le système de changement de vitesse comprend une boîte de vitesses (84) couplée entre la turbine d'un système de prélèvement d'air (72) et le surpresseur (70) de sorte que la turbine d'un système de prélèvement d'air (72) et le surpresseur (70) tournent à des vitesses différentes.

2. Moteur à turbine à gaz (20) selon la revendication 1, comportant une soupape de commande (96) commandant un écoulement d'air à travers la turbine d'un système de prélèvement d'air (72) pour commander une vitesse de la turbine d'un système de prélèvement d'air (72).

3. Moteur à turbine à gaz (20) selon une quelconque revendication précédente, comportant un dispositif de commande (86) recevant des informations indiquant la demande du système pneumatique (64) et commandant le fonctionnement d'au moins un dispositif de commande (99) pour régler un écoulement d'air communiqué au système pneumatique (64).

4. Procédé de commande d'un écoulement d'air de prélèvement de moteur d'un moteur à turbine à gaz avec une section de compresseur de moteur principal (24) et une section de turbine de moteur principal (28), le procédé comprenant :
la configuration d'un surpresseur (70) pour qu'il reçoive de l'air de prélèvement de moteur provenant de la section de compresseur de moteur principal (24) du moteur à turbine à gaz (20) ;
la compression de l'air de prélèvement de moteur provenant de la section de compresseur de moteur principal (24) avec le surpresseur (70) et la fourniture du prélèvement de moteur comprimé à un système pneumatique (64) conformément à une demande du système pneumatique (64), dans lequel le moteur à turbine à gaz (20) comprend une turbine d'un système de prélèvement d'air (72) entraînée par un écoulement d'air provenant de la section de compresseur de moteur principal (24),
l'entraînement du surpresseur (70) au moyen d'un système de changement de vitesse (84, 94) ; et
l'évacuation d'un écoulement d'air en excès de la demande à travers une soupape d'échappement (98),
**caractérisé en ce que** :
le système de changement de vitesse comprend une boîte de vitesses (84) couplée entre la turbine d'un système de prélèvement d'air (72) et le surpresseur (70) de sorte que la turbine d'un système de prélèvement d'air (72) et le surpresseur (70) tournent à des vitesses différentes.

5. Procédé selon la revendication 4, comportant l'évacuation d'une partie d'un écoulement d'air au moyen de la soupape d'échappement (98) à travers un passage d'échappement (100).
